# DEMANDE DE BREVET EUROPEEN

(11) **EP 0 723 365 A1**
(43) Date de publication de la demande: **24.07.1996**
(21) Numéro de dépôt: 96200090.7
(22) Date de dépôt: 15.01.1996
(51) Int. Cl.: H04N 3/32, H04N 5/14

(54) **Appareil vidéo à réglage dit de contour**

(30) Priorité: 18.01.1995 FR 9500528
(71) Demandeur: PHILIPS ELECTRONIQUE GRAND PUBLIC, 92150 Suresnes (FR); Philips Electronics N.V., 5621 BA Eindhoven (NL)
(72) Inventeur: Vacher, Pierre, Société Civile S.P.I.D., F-75008 Paris (FR)
(74) Mandataire: Caron, Jean

(57) **Abrégé**

L'appareil comportant un agencement (12) connu de modulation de la vitesse du spot en fonction de la luminance, à l'aide d'un bobinage déviateur horizontal annexe (13); cet agencement de modulation de la vitesse du spot comprend un amplificateur (18) dont le gain est réglable, et le principe d'un réglage de contour (50) mis à la disposition de l'utilisateur, est de commander ce gain.

Applications : télévision.

## Description

La présente invention concerne un appareil pour afficher des images au moyen d'un balayage de type télévision, sur la base d'un signal vidéo dont est extrait un signal de luminance, appareil muni d'un agencement pour moduler la vitesse du balayage en fonction du contenu du signal de luminance, agencement qui comporte un circuit de différenciation du signal de luminance suivi d'un amplificateur dont la sortie est reliée à un bobinage agissant sur le balayage horizontal, et muni d'un réglage dit "de contour" agissant sous le contrôle d'une tension électrique de commande de contour.

Les téléviseurs perfectionnés sont équipés d'un tel agencement pour moduler la vitesse du balayage, qui est destiné à donner une apparence plus nette aux images.

Un agencement pour moduler la vitesse de balayage est connu du brevet US 5,164,829. Ce document décrit un téléviseur, muni d'un dispositif de modulation de la vitesse du spot comprenant un circuit différentiateur du signal de luminance, suivi d'un amplificateur alimentant un bobinage déviateur horizontal annexe. Le téléviseur comporte en outre un circuit de réglage de contour, à la disposition d'un usager, basé sur l'ajustement du niveau de certaines composantes haute-fréquence du signal de luminance. Un circuit écrêteur limite l'amplitude de la modulation de vitesse du spot en fonction de la valeur de ce réglage du contour, réalisé par ailleurs. Un circuit de réglage de contour tel que celui mentionné par le document ci-dessus, agissant sur certaines composantes haute-fréquence du signal de luminance, est habituellement placé entre le circuit de séparation luminance/chrominance et le tube image, et il est relativement complexe ; il peut comporter par exemple une ligne à retard avec une prise médiane, fournissant un signal retardé d'un temps "D" et un signal retardé d'un temps "D/2", et un agencement de matriçage qui fait la somme du signal retardé de D et du signal d'origine et y ajoute, en proportion réglable, le signal retardé de D/2, ce qui introduit dans les transitions du signal vidéo des sortes de pics ou dépassements réglables, appelés parfois "overshoots", donnant l'impression subjective d'une plus grande netteté.

Un but de l'invention est de fournir un agencement avec lequel on puisse obtenir un réglage de contour d'un effet plus naturel et qui en outre ne nécessite qu'une simple adjonction de faible coût à un circuit existant.

A cet effet, un appareil pour afficher des images est remarquable en ce que le réglage de contour est essentiellement constitué au moyen de l'agencement pour moduler la vitesse du balayage, du fait que l'amplificateur de ce dernier est d'un type à gain réglable, et que le réglage de son gain est contrôlé par la susdite tension électrique de commande de contour, issue d'un bouton ou d'une touche de réglage de contour à la disposition d'un usager.

L'invention repose donc sur l'idée que, plutôt que de jouer sur le niveau de certaines composantes haute-fréquence du signal de luminance, il est plus simple et plus efficace de profiter de la présence d'un circuit de modulation de la vitesse de balayage, pour l'utiliser à cet usage non prévu, la seule condition pour cela étant que le gain de son amplificateur soit réglable.

Dans une forme de réalisation particulière, l'amplificateur à gain réglable comprend deux transistors montés chacun selon la configuration dite "en base commune" alimentés via leur émetteur par une même source de courant modulé par le signal de luminance différencié, le signal de sortie étant recueilli sur le collecteur de l'un d'eux, et des moyens pour faire varier le partage du courant modulé entre les deux transistors, une tension de commande appliquée à une entrée de commande de gain agissant sur les dits moyens.

L'amplificateur étant d'un type dont le courant d'alimentation qu'il consomme augmente avec l'amplitude du signal qu'il amplifie, l'agencement est de préférence muni de moyens pour diminuer le gain de l'amplificateur lorsque son courant d'alimentation augmente.

Dans une forme de réalisation particulière, ces moyens pour diminuer le gain lorsque le courant augmente dans l'amplificateur comprennent une résistance de mesure du courant d'alimentation, insérée dans le courant d'alimentation de l'amplificateur, sur une borne de laquelle apparaît une tension mesurant le courant, et cette borne est reliée à l'entrée de commande de gain de l'amplificateur à gain réglable.

Dans ce cas, pour la commande de gain de l'amplificateur, l'entrée de commande de gain de l'amplificateur est reliée à une résistance de charge connectée à la susdite borne de la résistance de mesure de courant, et le circuit de commande comprend un transistor commandé par le dit signal de réglage de contour, dont le courant traverse la résistance de charge

Ces aspects de l'invention ainsi que d'autres aspects plus détaillés apparaîtront plus clairement grâce à la description suivante d'un mode de réalisation non limitatif.

La figure 1 représente schématiquement un téléviseur.

La figure 2 représente schématiquement un agencement pour la modulation de vitesse de balayage.

La figure 3 est un schéma détaillé d'une forme de réalisation complète d'un agencement selon l'invention.

L'invention va être décrite en référence à un téléviseur, mais elle s'applique aussi à tout appareil d'affichage d'images, par exemple un moniteur.

Les principes de la modulation de vitesse du balayage et leur incidence sur l'aspect des transitions de luminance sont bien connues. On peut rappeler qu'il s'agit d'une manière artificielle de donner l'impression au spectateur que l'image est mieux définie qu'elle ne l'est en réalité. Pour obtenir cet effet on fait passer le signal de luminance dans un étage différenciateur qui génère donc un signal lorsqu'il y a une transition de la valeur de la luminance, signal qui est appliqué à la déviation horizontale du faisceau pour créer une différence de vitesse du balayage. Comme il serait difficile d'introduire une variation de vitesse dans les circuits de déviation horizontale connus, on préfère utiliser un bobinage de déviation annexé, située à proximité des bobinages principaux, et dans lequel on fait passer, pour corriger la vitesse du balayage, un courant proportionnel à la dérivée, par rapport au temps, du signal de luminance.

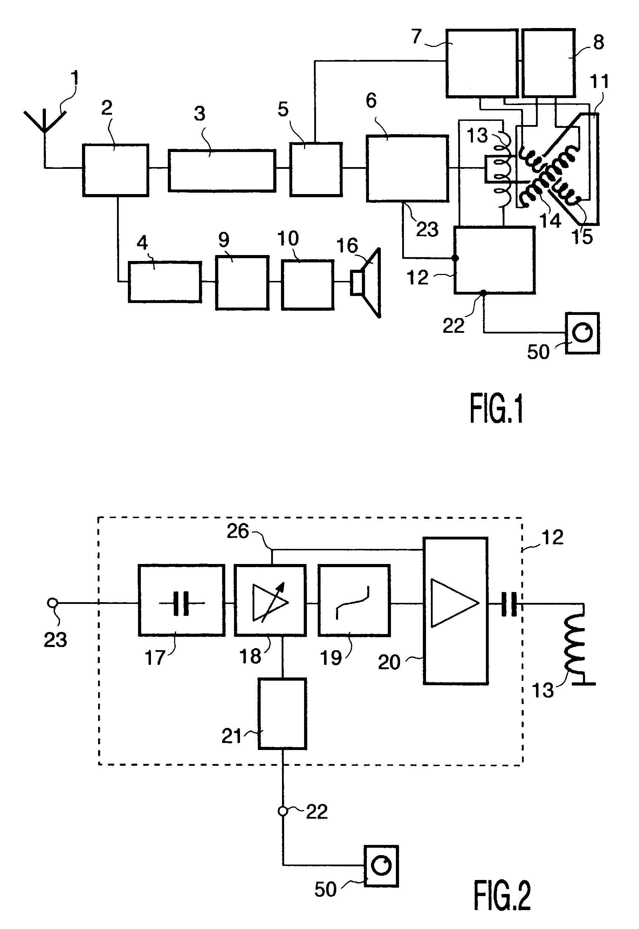

Le téléviseur dont le schéma est représenté sur la figure 1 comprend un syntoniseur 2 recevant un signal par exemple d'une antenne 1 et transposant sa fréquence vers celles nécessitées par un amplificateur à fréquence intermédiaire vidéo 3 et par un amplificateur à fréquence intermédiaire son 4 qui lui font suite. L'amplificateur à fréquence intermédiaire vidéo 3 est suivi d'un démodulateur 5 qui délivre les signaux vidéo en bande de base à un amplificateur vidéo 6, et des signaux de synchronisation à un étage de balayage ligne 7 et à un étage de balayage trame 8. Les signaux vidéo et de synchronisation utilisés peuvent aussi bien venir d'une source extérieure comme un décodeur satellite ou un magnétoscope. L'amplificateur 6 délivre les signaux ad-hoc aux électrodes d'un tube image 11 à rayons cathodiques. Les étages de balayage trame et ligne 8 et 7 délivrent des courants dans des bobinages déviateurs principaux 14 et 15 de trame et de ligne. L'amplificateur à fréquence intermédiaire 4 pour le son est suivi d'un démodulateur 9 qui délivre les signaux audio en bande de base à un amplificateur audio 10, alimentant un haut-parleur 16. Enfin les signaux de luminance sont transmis par l'amplificateur vidéo 6 à l'entrée 23 d'un agencement de modulation de vitesse du balayage 12, qui délivre un courant de modulation de la vitesse horizontale du balayage en fonction du contenu du dit signal vidéo, dans un bobinage déviateur horizontal annexe 13.

Le téléviseur comprend un réglage dit "de contour" à la disposition de l'usager, avec un bouton ou une touche 50 au moyen de laquelle est produit un signal de réglage de contour. Ce signal de réglage est amené à l'entrée 22 de l'agencement 12 de modulation de la vitesse du balayage.

L'agencement de modulation de vitesse représenté sur la figure 2 comporte une entrée 23 pour un signal vidéo, par exemple celui issu du démodulateur 6 de la figure 1. A partir de cette entrée, sont connectés en cascade :
- un étage 17 de différenciation du signal vidéo,
- un étage à gain réglable 18, avec une liaison 26 pour amener un signal de mesure du courant consommé par l'amplificateur 20, et un étage de commande 21, à l'entrée 22 duquel est amené un signal de réglage de contour issu d'une commande 50 à la disposition de l'usager
- un étage préamplificateur limiteur 19, dans lequel la limitation est obtenue au moyen de diodes, et
- un étage de puissance 20 dont la sortie est reliée au bobinage annexe 13.

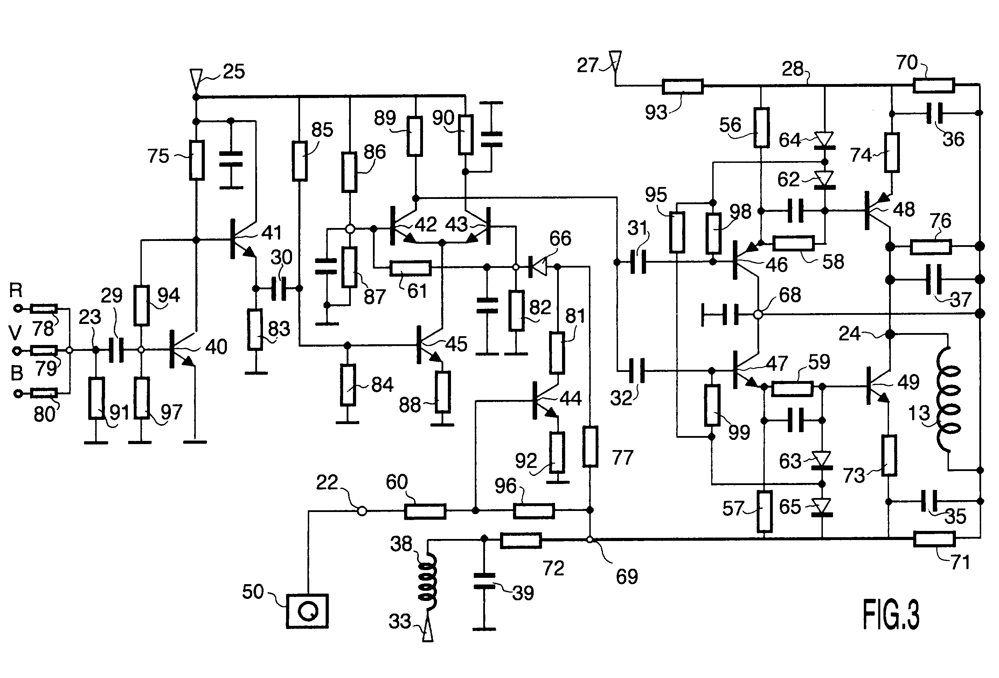

La figure 3 représente en détail une forme de réalisation particulière de l'agencement de la figure 2.

Les trois composantes R, V, B (rouge, vert, bleu) sont amenées, à gauche sur la figure, chacune à une extrémité d'une résistance respectivement 78, 79, 80. Ces résistances sont réunies à leur autre extrémité en un point commun 23, relié à la masse par une résistance 91, le tout constituant un circuit de matriçage qui fournit au point commun 23 la somme des trois composantes, c'est-à-dire reconstitue la luminance.

Le signal est transmis par une capacité 29 à la base d'un transistor 40 de type NPN qui est monté suivant le montage dit en émetteur commun, et qui est polarisé au moyen d'un pont de deux résistances 94,97 connecté entre le collecteur du transistor et la masse. La constante de temps procurée par la capacité 29 et les différentes impédances qui lui sont reliées est choisie de façon à procurer l'effet différenciateur recherché. Le signal amplifié, qui apparaît aux bornes d'une résistance de charge de collecteur 75 reliée à une source de tension d'alimentation positive 25, est amené à la base d'un transistor 41 de type NPN, monté en émetteur suiveur, dont le collecteur est directement relié à la source 25, et dont l'émetteur est relié à la masse par une résistance 83. Le montage comprenant la capacité 29 et les transistors 40,41 correspond à l'étage de différenciation 17 de la figure 2.

A partir de l'émetteur du transistor 41, le signal amplifié est amené via une capacité 30 à la base d'un transistor 45 de type NPN, polarisé au moyen d'un pont de deux résistances 85, 84 connecté entre la source de tension d'alimentation 25 et la masse, et monté suivant le montage dit en émetteur commun avec néanmoins une résistance 88 dans sa connexion d'émetteur pour améliorer la linéarité. Ce transistor constitue la "queue" d'un montage bien connu constitué par le transistor 45 et par une paire de transistors 42, 43 de type NPN chargés par des résistances de collecteur respectivement 89, 90. Le transistor 42 est polarisé au moyen d'un pont de deux résistances 86, 87 connecté entre la source de tension d'alimentation 25 et la masse, et sa base est découplée à la masse par une capacité. Le transistor 43 est polarisé entre autres par un pont de résistances 61 et 82 entre la base du transistor 42 et la masse, la base du transistor 43 étant elle aussi découplée à la masse par une capacité.

Néanmoins ce montage qui ressemble à une paire différentielle n'est pas utilisé comme tel, car les deux transistors 42 et 43 sont ici montés chacun selon la configuration dite "en base commune" du fait que leurs bases sont toutes deux découplées vers la masse par une capacité. Ils sont alimentés via leur émetteur par une même source de courant, constituée par le transistor 45, qui est modulé par le signal de luminance différencié. Le signal de sortie est recueilli sur le collecteur du transistor 42. Des moyens décrits plus loin sont prévus pour faire varier le partage du courant modulé entre les deux transistors, et ainsi le gain de l'étage est réglable.

Le montage comprenant les transistors 42, 43, 45 correspond à l'étage à gain commandé 18 de la figure 2.

La polarisation du transistor 43, de laquelle dépend le partage du courant modulé entre les deux transistors 42 et 43, est rendue réglable au moyen d'un montage particulier. Ce montage comprend une source de courant, constituée d'un transistor 44 de type NPN, débitant dans deux résistances de charge 81 et 77 en série, reliées à une source de tension d'alimentation positive. La base du transistor 43 est reliée au point commun des résistances 81 et 77. L'émetteur du transistor 44 est connecté à la masse via une résistance 92 et sa base est reliée par une résistance 60 à une borne 22 à laquelle est amené un signal de réglage de contour issu d'un bouton ou d'une touche de réglage de contour 50 à la disposition de l'usager. Entre la base du transistor 43 et la résistance 77 est en outre insérée une diode 66, afin de limiter l'amplitude de la correction susceptible d'être apportée par le montage.

Le montage comprenant le transistor 44 correspond à l'étage de commande 21 de la figure 2.

L'amplificateur de sortie avec les transistors 46 à 49, qui sera décrit plus en détail dans la suite, est alimenté entre deux bornes d'alimentation 27 et 33.

Une résistance 93 est insérée en série dans le courant de la source de tension d'alimentation 27 : une extrémité de cette résistance 93 constitue une source de tension d'alimentation 28 qui alimente deux étages d'amplification.

La source de tension d'alimentation 33 est munie d'une cellule constituée d'une inductance 38 traversée par le courant d'alimentation et d'une capacité 39 allant vers la masse. Une résistance 72 de mesure du courant d'alimentation est en outre insérée dans le courant d'alimentation. Sur une borne 69 de cette résistance 72 apparaît donc une tension mesurant ce courant.

La résistance de charge 77 du transistor 44 est reliée à l'extrémité 69 de la résistance de mesure 72, et ainsi la tension de base du transistor 43 augmente lorsque le courant dans l'étage de puissance augmente. Alors le courant dans le transistor 43 augmente et par voie de conséquence celui dans le transistor 42 diminue. Le signal de sortie du montage est justement prélevé sur le collecteur du transistor 42, et le gain de l'ensemble diminue donc lorsque le courant augmente dans l'étage de puissance. La base du transistor 44 est en outre reliée par une résistance 96 à la borne 69.

Le signal sur le collecteur du transistor 42 est amené via deux capacités 31, 32 en même temps aux deux entrées d'un préamplificateur symétrique de type connu en soi, muni de deux voies d'amplification constituées respectivement
- de deux étages à transistors PNP 46,48, le transistor 46 étant monté suivant le montage dit émetteur suiveur et le transistor 48 suivant le montage dit en émetteur commun, et
- de deux étages à transistors NPN 47,49, le transistor 47 étant monté suivant le montage dit émetteur suiveur et le transistor 49 suivant le montage dit en émetteur commun.

Les transistors 46 et 47 d'une part, et les transistors 48 et 49 d'autre part, sont montés en cascade entre les deux sources de tension d'alimentation 27 et 33.

Les transistors d'entrée 46 et 47 sont polarisés au moyen d'une diode 64, d'une résistance 95 et d'une diode 65, connectées en série entre les deux sources de tension d'alimentation 28 et 33. La base du transistor 46 est reliée par une résistance 98 au point commun entre la diode 64 et la résistance 95. La base du transistor 47 est reliée par une résistance 99 au point commun entre la diode 65 et la résistance 95. L'émetteur du transistor 46 est relié à la source de tension d'alimentation 27 par une résistance de charge 56, celui du transistor 47 est relié à la source de tension d'alimentation 33 par une résistance de charge 57.

Les émetteurs des transistors 46 et 47 sont reliés par des résistances respectivement 58 et 59 aux bases des transistors 48 et 49 ce qui réalise la polarisation de ces derniers, qui sont munis de résistances respectivement 74 et 73 dans les émetteurs pour limiter le gain et obtenir plus de linéarité.

La base du transistor 48 est reliée par une diode 62 au point commun de la diode 64 et de la résistance 95, ce qui entraîne un écrêtage du signal de base du transistor 48, l'empêchant de descendre de plus d'une valeur de tension directe de diode, par rapport à la tension au point commun de la diode 64 et de la résistance 95. De façon symétrique, la base du transistor 49 est reliée par une diode 63 au point commun de la diode 65 et de la résistance 95, ce qui entraîne un écrêtage du signal de base du transistor 49, l'empêchant de monter de plus d'une valeur de tension directe de diode, par rapport à la tension au point commun de la diode 65 et de la résistance 95. Ces écrêtages entraînent l'effet de limitation déjà mentionné, le montage entourant les diodes 62 et 63 correspondant au préamplificateur 19 de la figure 2.

Les collecteurs des transistors 48 et 49 sont connectés ensemble au point 24, auquel est reliée une extrémité du bobinage annexe 13. L'autre extrémité du bobinage annexe 13 est reliée
- du point de vue du courant continu, aux deux sources d'alimentation de l'étage de puissance par des résistances respectivement 70 et 71, fournissant en outre un point intermédiaire d'alimentation 68 au point commun des collecteurs des transistors 46 et 47 et,
- du point de vue du courant alternatif, aux deux sources d'alimentation de l'étage de puissance par des capacités respectivement 36 et 35.

Pour que les transistors 48 et 46 soient conducteurs, les deux jonctions émetteur-base en série de ces deux transistors nécessitent une tension plus grande que celle développée aux bornes de la seule diode 64, et les transistors sont donc bloqués en l'absence de signal. Il s'agit d'un amplificateur dit "push-pull classe B", dont le courant d'alimentation qu'il consomme augmente avec l'amplitude du signal qu'il amplifie.

Entre les deux extrémités du bobinage 13 se trouve en outre un montage en parallèle d'une résistance 76 et d'une capacité 37, habituel dans ce genre d'amplificateur et destiné à empêcher des auto-oscillations dans certaines circonstances.

Le montage comprenant les transistors 48 et 49 constitue l'étage de puissance référencé 20 sur la figure 2.

Dans une réalisation donnant de bons résultats, les composants ont les valeurs ou sont des types suivants :
- transistors : n° 40,41 = BC848, n° 42,43,44,45 = BC847, n° 46 = BC557, n° 47 = BD546, n° 48 = BD830, n° 49 = BD829,
- diodes : n° 64 à 66 = LL4148 , n° 62,63 = BA682,
- capacités : n° 29 = 47 pF, n° 30 = 27 nF , n° 31, 32 = 1 nF, n° 35, 36 = 22 µF, n° 37 = 56 pF, n° 39 = 100 nF,
- inductance du bobinage déviateur 13 = 2 µH
- résistances : n° 56, 57 = 680 Ω, n°58, 59 = 470 Ω, n°60 = 1kΩ, n°61 = 6,8 kΩ, n°70, 71 = 5,6 kΩ, n°72 = 1 kΩ, n°73, 74 = 4,7 Ω, n°75 = 1 kΩ, n°76 = 390 Ω, n°77 = 33 kΩ, n°78 = 1,5 kΩ, n°79 = 1,5 kΩ, n°80 = 1,5 kΩ, n°81 = 6,8 kΩ, n°82 = 68 kΩ, n°83 = 470 Ω, n°84 = 15 kΩ, n°85 = 120 kΩ, n°86 = 22 kΩ, n°87 = 12 kΩ, n°88 = 390 Ω, n°89 = 1,8 kΩ, n°90 = 1 kΩ, n°91 = 1 kΩ, n°92 = 4,7 kΩ, n°93 = 1 kΩ, n°94 = 10 kΩ, n°95 = 78 kΩ, n°96 = 100 kΩ, n°97 = 10 kΩ, n°98, 99 = 22 kΩ.
- tensions d'alimentation : n° 25 = 14 volts, n° 27 = 148 volts, n° 33 = 33 volts.

## Revendications

1. Appareil pour afficher des images au moyen d'un balayage de type télévision, sur la base d'un signal vidéo dont est extrait un signal de luminance, appareil muni d'un agencement pour moduler la vitesse du balayage en fonction du contenu du signal de luminance, agencement qui comporte un circuit de différenciation du signal de luminance suivi d'un amplificateur dont la sortie est reliée à un bobinage agissant sur le balayage horizontal, et muni d'un réglage dit "de contour" agissant sous le contrôle d'une tension électrique de commande de contour, caractérisé en ce que le réglage de contour est essentiellement constitué au moyen de l'agencement pour moduler la vitesse du balayage, du fait que l'amplificateur de ce dernier est d'un type à gain réglable, et que le réglage de son gain est contrôlé par la susdite tension électrique de commande de contour, issue d'un bouton ou d'une touche de réglage de contour à la disposition d'un usager.

2. Appareil pour afficher des images, selon la revendication 1, caractérisé en ce que l'amplificateur à gain réglable comprend deux transistors montés chacun selon la configuration dite "en base commune" alimentés via leur émetteur par une même source de courant modulé par le signal de luminance différencié, le signal de sortie étant recueilli sur le collecteur de l'un d'eux, et des moyens pour faire varier le partage du courant modulé entre les deux transistors, une tension de commande appliquée à une entrée de commande de gain agissant sur les dits moyens.

3. Appareil pour afficher des images, selon l'une des revendications 1 ou 2, caractérisé en ce que, l'amplificateur étant d'un type dont le courant d'alimentation qu'il consomme augmente avec l'amplitude du signal qu'il amplifie, l'agencement est en outre muni de moyens pour diminuer le gain de l'amplificateur lorsque son courant d'alimentation augmente.

4. Appareil pour afficher des images, selon la revendication 3, caractérisé en ce que les moyens pour diminuer le gain, lorsque le courant dans l'amplificateur augmente, comprennent une résistance de mesure du courant d'alimentation, insérée dans le courant d'alimentation de l'amplificateur, sur une borne de laquelle apparaît une tension mesurant le courant, et cette borne est reliée à l'entrée de commande de gain de l'amplificateur à gain réglable.

5. Appareil pour afficher des images, selon la revendication 4, caractérisé en ce que l'entrée de commande de gain de l'amplificateur est reliée à une résistance de charge connectée à la susdite borne de la résistance de mesure de courant, et le circuit de commande comprend un transistor, commandé par le dit signal de réglage de contour, dont le courant traverse la résistance de charge.
